# EUROPÄISCHE PATENTSCHRIFT

(11) **EP 1 155 893 B1**
(45) Veröffentlichungstag und Bekanntmachung des Hinweises auf die Patenterteilung: **13.07.2005**
(21) Anmeldenummer: 01107993.6
(22) Anmeldetag: 29.03.2001
(51) Int. Cl.: B60K 5/12

(54) **Vorrichtung zur Drehmomentabstützung einer Brennkraftmaschine**
Apparatus for supporting the torque load of an internal combustion engine
Dispositif d'absorption de couple d'un moteur à combustion interne

(30) Priorität: 17.05.2000 DE 10024164
(43) Veröffentlichungstag der Anmeldung: 21.11.2001
(73) Patentinhaber: Dr.Ing. h.c.F. Porsche Aktiengesellschaft, 70435 Stuttgart (DE)
(72) Erfinder: Kramer, Andreas, 71729 Erdmannhausen (DE); Munzert, Andreas, 71706 Markgröningen (DE)

(56) Entgegenhaltungen:
- EP-A- 0 892 192
- DE-A- 4 209 613
- FR-A- 2 731 184
- FR-A- 2 736 008
- PATENT ABSTRACTS OF JAPAN vol. 1998, no. 10, 31. August 1998 (1998-08-31) & JP 10 114226 A (SUZUKI MOTOR CORP), 6. Mai 1998 (1998-05-06) & JP 10 114226 A 6. Mai 1998 (1998-05-06)
- PATENT ABSTRACTS OF JAPAN vol. 015, no. 113 (M-1094), 18. März 1991 (1991-03-18) & JP 03 005239 A (SUZUKI MOTOR CO LTD), 11. Januar 1991 (1991-01-11)

## Beschreibung

Die Erfindung bezieht sich auf eine Vorrichtung zur Drehmomentabstützung einer Brennkraftmaschine nach dem Oberbegriff des Anspruchs 1.

Aus der DE 42 09 613 A1 ist eine Aggregatlagerung mit einer Drehmomentabstützung aus einer starren Stütze bestehend bekannt. Diese Stütze ist zwischen einem Aggregat und einem Fahrzeugrahmen angeordnet, wobei in der Stütze elastische Lager vorgesehen sind. Aus der gattungsbildenden FR 2731 184 A1 ist eine Drehmomentstütze bekannt, die einen Stützenarm umfasst, der einerseits über ein elastisches Lager mit der Brennkraftmaschine und des Weiteren mit seinem anderen Ende über ein Lager mit einem Träger des Fahrzeugaufbaus verbunden ist. Zur vertikalen Abstützung des Stützenarmes ist eine weitere Strebe vorgesehen, die einerseits am Verbindungspunkt zwischen dem Stützenarm mit dem Träger und andererseits mit seinem abgekehrten freien Ende mit einer Fahrzeugstruktur verbunden ist.

Aufgabe der Erfindung ist es, eine Vorrichtung zur Drehmomentabstützung einer Brennkraftmaschine mittels einer Drehmomentstütze zu schaffen, die einerseits Leerlaufbewegungen des Aggregats zulässt und nicht weiter leitet und andererseits eine Momentenabstützung im Betrieb gewährleistet und darüberhinaus eine einfache Montage sicherstellt.

Diese Aufgabe wird erfindungsgemäß durch die Merkmale des Anspruches 1 gelöst. Weitere vorteilhafte Merkmale beeinhalten die Unteransprüche.

Die mit der Erfindung erzielten Vorteile bestehen im wesentlichen darin, dass die Brennkraftmaschine bei auftretenden Momenten im Betrieb über die Drehmomentstütze am Langsträger des Fahrzeugaufbaus abgestützt wird. Erfindungsgemäß können auch an jeder Seite des Aggregats zu den Längsträgern weisende Drehmomentstützen angeordnet sein.

Hierzu ist die Drehmomentstütze wenigstens zweiteilig ausgebildet und besteht aus einem mit einer Zykinderkopfhaube und/oder einem Nockenwellengehäuse unter Zwischenschaltung eines relativ steifen Gelenklagers verbundenen Stützenarm, sowie einer anschließenden und über ein ortsfestes elastisches Lager gehaltenen Strebe, die endseitig an einem Träger der Aufbaustruktur befestigt wird.

Damit ein Ausknicken der Drehmomentstütze im Betrieb vermieden wird, ist der Stützenarm mit einem Ende an der Zylinderkopfhaube bzw. am Nockenwellengehäuse über eine Konsole befestigt, in dem das Gelenklager gehalten wird, und mit seinem anderen abgekehrten Ende in dem elastischen Lager abgestützt, das über einen Aufnahmebock am Federbeindom ortsfest gelagert ist. Durch diese erfindungsgemäße Ausbildung und Abstützung der Drehmomentstütze wird die Kraft, die vom Aggregat erzeugt wird, linear in den Längsträger der Karosserie eingeleitet, wobei Schwingungen beim Leerlauf der Brennkraftmaschine von der Karosserie ferngehalten werden.

Zur Abstützung am Federbeindom ist die Strebe mit dem Aufnahmebock starr verbunden und stützt sich mit einem dem Stützenarm zugerichteten Ende in dem elastischen Lager ab, dass in dem Aufnahmebock gehalten wird.

Damit der Aufwand zur Befestigung des Aufnahmebocks an der Aufbaustruktur gering gehalten werden kann, wird ein bestehender Schraubpunkt eines Lagerbocks, in welcher das Federbein gelagert ist, mitverwendet.

Die Strebe ist mit dem Stützenarm über ein elastisches Lager verbunden, das im Aufnahmebock gehalten wird, wobei in einem Auge des Stützenarmes das elastische Lager angeordnet ist und dieser zwischen dem Aufnahmebock und der Strebe liegt. Der Aufnahmebock übergreift die Strebe zur Befestigung mittels zweier Arme und zur Befestigung mit dem Federbeindom weist dieser eine Abstellung auf, welche am Federbeindom über mindestes eine Schraube festgesetzt wird.

Hierdurch ist die Strebe von der Anbindung am Längsträger bis zum Aufnahmebock starr ausgeführt und der sich anschließende Stützenarm -ist über das elastische Lager sowie über das Gelenklager verschwenkbar, das sich in einem mit dem Nockenwellengehäuse verbundenen Konsolenstützbock abstützt, der hierzu mit einem Fuß ausgeführt ist, der am Nockenwellengehäuse befestigbar ist.

Das verbindende elastische Lager zwischen der Strebe und dem Stützenarm wirkt als sogenanntes Dämpfungslager und weist eine stark progressiv abgestimmte Kennlinie auf und umfasst zwei nierenförmige Ausnehmungen, die in Richtung der Druckbelastung der Drehmomentstütze hintereinander liegend in einer horizontalen Ebene ausgerichtet sind.

Das Gelenklager der Stütze soll dagegen lediglich Drehbewegungen beim Federn des Aggregats zulassen. Es kann entweder aus einem Gummilager mit hoher radialer Steifigkeit und relativ niedriger Verdrehsteifigkeit bestehen oder als Kugelgelenk ausgeführt sein.

Damit die vom Aggregat erzeugte Kraft linear in den Karosserielängsträger eingeleitet werden kann, erfolgt die Anbindung des Stützenarmes an diesem Träger über einen Blechwinkel, der mit dem Träger der Aufbaustruktur verbindbar ist und hierzu den Träger von oben und von unten übergreifende Schenkel aufweist und die Strebe etwa mittig des Trägers endet.

Der Blechwinkel ist ein einfach herzustellendes Blechfaltteil, welches die Kraft möglichst mittig in den Längsträger über die in Kraftrichtung liegenden Wände einleitet.

Ein Ausführungsbeispiel der Erfindung ist in den Zeichnungen dargestellt und wird im folgenden näher beschrieben:

Es zeigen
- Fig.1: eine schaubildliche Darstellung einer eingebauten Drehmomentstütze mit Strebe und Stützenarm und Befestigung am Längsträger, am Federbeindom und am Nockenwellengehäuse,
- Fig.2: eine Daraufsicht auf die Drehmomentstütze,

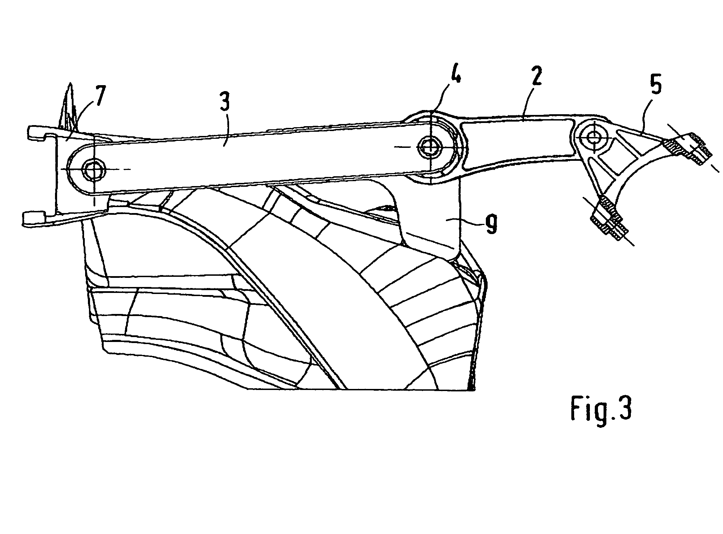

- Fig.3: eine Vorderansicht der Drehmomentstütze, mit Konsolenstützbock
- Fig.4: einen Schnitt durch die Befestigung des Stützenarmes am Nockenwellengehäuse,
- Fig.5: einen Schnitt durch die Strebe mit Blechwinkel und Befestigung am Längsträger,

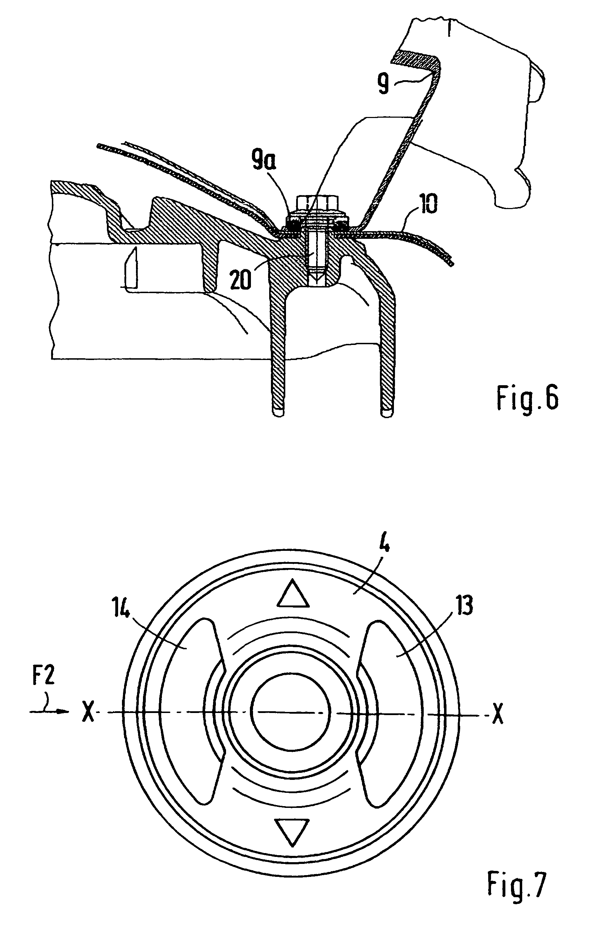

- Fig.6: einen Schnitt durch die Befestigung des Aufbaubocks am Federbeindom und
- Fig.7: eine Vorderansicht auf das Lager mit nierenförmigen Ausnehmungen.

Die Vorrichtung 1 zur Drehmomentabstützung umfasst eine Strebe 3, einen Stützenarm 2, sowie ein verbindendes elastisches Lager 4. Der Stützenarm 2 ist unter Zwischenschaltung eines Gelenklagers 11 über einen Konsolenstützbock 5 mit einem Nockenwellengehäuse 6 und die Strebe 3 ist über einen Blechwinkel 7 mit einem Längsträger 8 des Fahrzeugaufbaus verbunden. Über einen Aufnahmebock 9 wird die Strebe 3 am Federbeindom 10 des Fahrzeugs abgestützt.

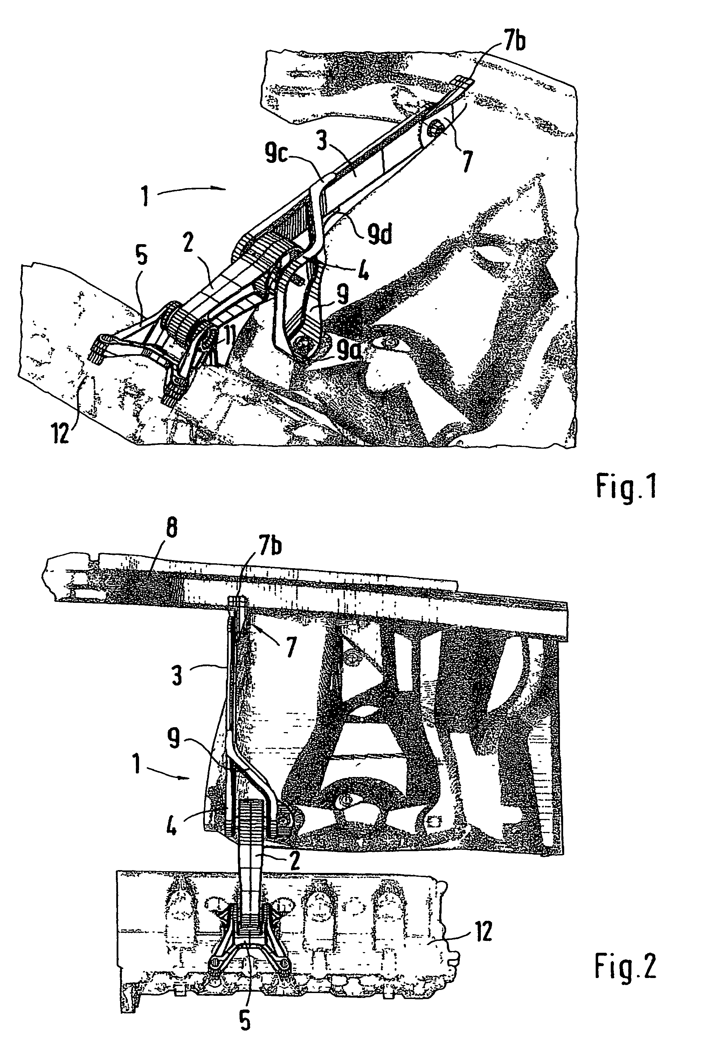

Die Strebe 3 und der Stützenarm 2 der Drehmomentstütze 1 sind etwa in einer horizontalen Ebene angeordnet und erstrecken sich zur Abstützung von Drehmomenten des Aggregats und zur Aufnahme von Leerlaufschwingungen von der Zylinderkopfhaube 12 bis zu einem seitlich des Fahrzeugaufbaus angeordneten Längsträger 8, wie Fig. 2 näher zeigt.

Die Strebe 3 und der Stützenarm 2 sind über ein elastisches Lager 4 miteinander verbunden, das in einem Auge des Stützenarmes 2 gehalten wird und auf einem Lagerbolzen abgestützt ist, der mit der Strebe 3 und dem Aufnahmebock 9 verbunden ist. Die Strebe 3 und der Aufnahmebock 9 können statt aus einem Blechprofil bestehend auch aus einem Fußteil hergestellt sein.

Das Lager 4 im Stützenarm 2 weist nierenförmige Ausnehmungen 13, 14 auf, die in Richtung der Druckbelastung und/oder Zugbelastung F2 des Stützenarmes 2 hintereinander liegend in einer horizontalen Ebene X - X angeordnet sind. Durch diese Anordnung der Ausnehmungen 13, 14 werden die Leerlaufbewegungen des Aggregats nicht auf die Karosserie bzw. den Längsträger 8 übertragen. Es ergibt sich durch die Ausnehmungen eine stark progressive Kennlinie des Lagers 4 bei den Druck- bzw. Zugbelastungen.

Das dem elastischen Lager 4 abgekehrte freie Ende des Stützenarmes 2 ist über ein hartes Gummilager 11 bzw. ein Kugelgelenk mit dem Konsolenstützbock 5 verbunden, welches lediglich die Drehbewegung beim Federn des Aggregats zulassen soll.

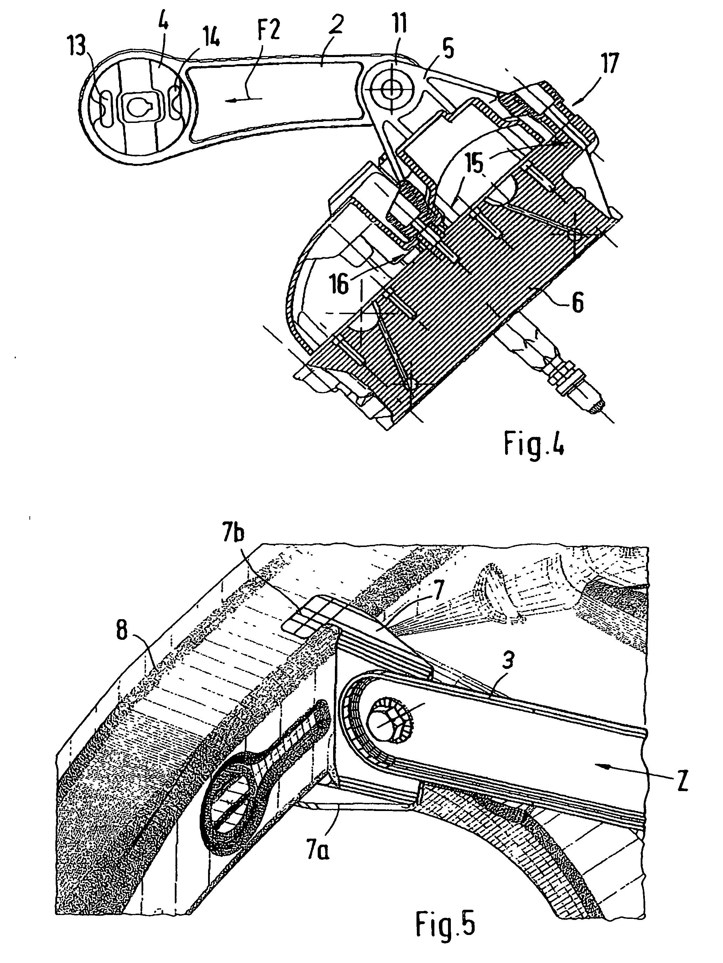

Der mit dem Gummilager 11 verbundene Konsolenstützbock 5 ist, wie Fig. 4 näher zeigt, mit seinem Fuß 15 am Nockenwellengehäuse 6, beispielsweise in Aufnahmen 16, 17 fixiert und über Schrauben festgesetzt, die nur als Linien dargestellt sind.

Die Strebe 3 ist einerseits mit dem Aufnahmebock 9 und andererseits über den Blechwinkel 7 starr am Federbeindom 10 bzw. am Längsträger 8 der Aufbaustruktur befestigt. Hierzu weist der Blechwinkel 7 zwei den Träger 8 von oben und von unten übergreifende Schenkel 7a, 7b auf, so dass die Strebe 3 eine Lage zum Träger 8 einnimmt, welche eine Krafteinleitung von der Strebe 3 in den Träger 8 etwa mittig in Pfeilrichtung Z bewirkt.

Die Verbindung des Aufnahmebocks 9 mit dem Federbeindom 10 erfolgt über eine Abstellung 9a, welche am Federbeindom 10 aufliegt und mittels einer Schraube 20 verbunden wird.

## Patentansprüche

1. Vorrichtung zur Drehmomentabstützung einer Brennkreftmaschine in einem Fahrzeug über mindestens eine Drehmomentstütze (1), die im Fahrzeug zwischen der Brennkraftmaschine und -einem Aufbauträger (8)- des Fahrzeugs angeordnet und mit der Aufbaustruktur verbunden ist, wobei die Drehmomentstütze (1) zweiteilig aus einem Stützenarm (2) und einer Strebe (3) besteht, die über ein Lager (4) miteinander verbunden sind, **dadurch gekennzeichnet, dass** die Drehmomentstütze querliegend im Fahrzeug angeordnet ist, und der Stützenarm (2) einerseits über ein Stützenarm (2) einerseits über ein steifes Gelenklager (11) mit einer Schwenkachse mit einer Zylinderkopfhaube (12) und/oder einem Nockenwellengehäuse (6) und andererseits über ein ortsfestes elastisches Lager (4) mit einer weiteren Schwenkachse mit der Strebe (3) verbunden ist, welche endseitig an dem Träger (8) der Aufbaustruktur des Fahrzeugs befestigt wird.

2. Vorrichtung nach Anspruch 1, **dadurch gekennzeichnet, dass** der Stützenarm (2) mit einem Ende an der Zylinderkopfhaube (12) und/oder am Nockenwellengehäuse (6) über einen Konsolenstützbock (5) in dem Gelenklager (11) gehalten ist und mit seinem abgekehrten anderen Ende in dem elastischen Lager (4) abgestützt ist, das über einen Aufnahmebock (9) an einem Federbeindom (10) ortsfest gelagert ist.

3. Vorrichtung nach Anspruch 2, **dadurch gekennzeichnet, dass** die Strebe (3) mit dem Aufnahmebock (9) starr verbunden ist und sich mit einem dem Stützenarm (2) zugerichteten Ende in dem elastischen Lager (4) abstützt, das in dem Aufnahmebock (9) gehalten wird.

4. Vorrichtung nach den Ansprüchen 2 oder 3, **dadurch gekennzeichnet, dass** in einem Lagerauge des Stützenarmes (2) das elastische Lager (4) angeordnet ist und dieser Arm (2) zwischen dem Aufnahmebock (9) und der Strebe (3) liegt und der Aufnahmebock (9) die Strebe (3) zur Befestigung mittels zweier Arme (9c, 9d) übergreift und zum Befestigen mit dem Federbeindom (10) eine Abstellung (9a) aufweist.

5. Vorrichtung nach einem der Ansprüche 2 bis 4, **dadurch gekennzeichnet, dass** der Konsolenstützbock (5) mit seinem Fuß (16) in Aufnahmen (16, 17) des Nockenwellengehäuses (6) befestigbar ist.

6. Vorrichtung nach einem oder mehreren der vorhergehenden Ansprüche, **dadurch gekennzeichnet, dass** das den Stützenarm (2) mit der Strebe (3) verbindende elastische Lager (4) als Dämpfungslager mit zwei nierenförmigen Ausnehmungen (13, 14) ausgebildet ist, die in Richtung der Druckbelastung (F2) der Drehmomentstütze (1) hintereinander liegend in einer horizontalen Ebene (X - X) ausgerichtet sind.

7. Vorrichtung nach einem oder mehreren der vorhergehenden Ansprüche, **dadurch gekennzeichnet, dass** die Strebe (3) endseitig einen Blechwinkel (7) aufweist, der mit dem Träger (8) der Aufbaustruktur verbunden ist und zwei den Träger (8) von oben und von unten übergreifende Schenkel (7a, 7b) aufweist und die Strebe (3) vor einem Steg des Trägers (8) derart endet, dass die Krafteinleitung (Z) etwa mittig in das Trägerprofil erfolgt.

## Claims

1. A device for supporting the torque of an internal-combustion engine in a vehicle by means of at least one torque support (1) which is arranged in the vehicle between the internal-combustion engine and a body member (8) of the vehicle and is connected to the body structure, wherein the torque support (1) is bipartite and comprises a support arm (2) and a strut (3) which are connected to one another via a bearing (4), **characterised in that** the torque support is arranged transversely in the vehicle, and the support arm (2) is connected at one end to a cylinder-head cover (12) and/or a camshaft housing (6) via a rigid articulated bearing (11) with a pivoting axis, and at the other end to the strut (3) via a fixed resilient bearing (4) with a further pivoting axis, the end of the strut (3) being fixed to the member (8) of the body structure of the vehicle.

2. A device according to claim 1, **characterised in that** the support arm (2) is held with one end in the articulated bearing (11) on the cylinder-head cover (12) and/or on the camshaft housing (6) via a supporting frame (5) and is supported with its remote other end in the resilient bearing (4) which is fixedly mounted on a suspension-strut dome (10) via a mounting frame (9).

3. A device according to claim 2, **characterised in that** the strut (3) is rigidly connected to the mounting frame (9) and is supported, by an end facing the support arm (2), in the resilient bearing (4) which is held in the mounting frame (9).

4. A device according to claim 2 or 3, **characterised in that** the resilient bearing (4) is arranged in a bearing eye of the support arm (2), and this arm (2) lies between the mounting frame (9) and the strut (3), and the mounting frame (9) engages over the strut (3) and fastens it by means of two arms (9c, 9d) and has a base surface (9a) for fastening to the suspension-strut dome (10).

5. A device according to any one of claims 2 to 4, **characterised in that** the supporting frame (5) is fixable by its base (16 [*sic* - 15]) in receptacles (16, 17) of the camshaft housing (6).

6. A device according to one or more of the preceding claims, **characterised in that** the resilient bearing (4) connecting the support arm (2) to the strut (3) is formed as a damping bearing with two kidney-shaped recesses (13, 14) which are arranged so as to lie one behind the other in a horizontal plane (X-X) in the direction of the pressure loading (F2) of the torque support (1).

7. A device according to one or more of the preceding claims, **characterised in that** the strut (3) has at its end an angle iron (7) which is connected to the member (8) of the body structure and has two arms (7a, 7b) engaging over the member (8) from above and from below, and the strut (3) ends upstream of a web of the member (8) so that the force transmission (Z) into the member section takes place substantially centrally.

## Revendications

1. Dispositif pour supporter le couple de rotation d'un moteur à combustion interne dans un véhicule, par l'intermédiaire d'au moins un appui de couple de rotation (1) qui est disposé dans le véhicule entre le moteur à combustion interne et une poutre (8) de la carrosserie du véhicule et est relié à la structure de la carrosserie, l'appui (1) du couple de rotation étant constitué en deux parties, d'un bras d'appui (2) et d'une entretoise (3) qui sont reliés entre eux par un palier (4), **caractérisé en ce que** l'appui du couple de rotation est disposé transversalement dans le véhicule, et le bras d'appui (2) est relié d'une part, par un palier d'articulation (11) rigide avec un axe de pivotement, à un capot de culasse (12), et/ou à un carter d'arbre à cames (6) et d'autre part, par un palier élastique (4) fixe avec un autre axe de pivotement, à l'entretoise (3), laquelle est fixée côté extrémité sur la poutre (8) de la structure de la carrosserie du véhicule.

2. Dispositif selon la revendication 1, **caractérisé en ce que** le bras d'appui (2) est maintenu par une extrémité sur le capot de culasse (12) et/ou sur le carter d'arbre à cames (6) par une console de support (5), dans le palier d'articulation (11), et est soutenu, par son autre extrémité opposée, dans le palier élastique (4) lequel est monté en un emplacement fixe par un support de réception (9) sur le dôme (10) d'une jambe de force à ressort.

3. Dispositif selon la revendication 2, **caractérisé en ce que** l'entretoise (3) est reliée rigidement au support de réception (9) et prend appui, par une extrémité dirigée vers le bras d'appui (2), dans le palier élastique (4) qui est maintenu dans le support de réception (9).

4. Dispositif selon les revendications 2 ou 3, **caractérisé en ce que** le palier élastique (4) est disposé dans un oeillet d'appui du bras d'appui (2), et ce bras (2) se situe entre le support de réception (9) et l'entretoise (3) et le support de réception (9) passe sur l'entretoise (3) pour la fixation au moyen de deux bras (9c, 9d), et présente un gradin (9a) pour la fixation avec le dôme (10) de la jambe de force à ressort.

5. Dispositif selon l'une des revendications 2 à 4, **caractérisé en ce que** la console d'appui (5) peut être fixée par son pied (16) dans des logements (16, 17) du carter d'arbre à cames (6).

6. Dispositif selon une ou plusieurs des revendications précédentes, **caractérisé en ce que** le palier élastique (4), reliant le bras d'appui (2) à l'entretoise (3), est conçu comme palier d'amortissement avec deux évidements (13, 14) en forme de haricot qui sont orientés l'un derrière l'autre dans un plan horizontal (X-X), dans la direction de l'action (F2) de la pression sur l'appui (1) du couple de rotation.

7. Dispositif selon une ou plusieurs des revendications précédentes, **caractérisé en ce que** l'entretoise (3) présente côté extrémité une équerre en tôle (7) qui est reliée à la poutre (8) de la structure de la carrosserie et comporte deux branches (7a, 7b) passant sur la poutre (8) depuis le haut et depuis le bas, et l'entretoise (3) se termine devant une âme de la poutre (8) de manière que l'introduction des forces (Z) s'effectue à peu près au milieu dans le profilé de la poutre.
